# EUROPEAN PATENT SPECIFICATION

(11) **EP 1 657 105 B1**
(45) Date of publication and mention of the grant of the patent: **05.12.2007**
(21) Application number: 04425837.4
(22) Date of filing: 12.11.2004
(51) Int. Cl.: B60K 37/00

(54) **A modular dashboard for a motor vehicle**
Modulares Armaturenbrett
Tableau de bord modulaire

(43) Date of publication of application: 17.05.2006
(73) Proprietor: C.R.F. SOCIETA' CONSORTILE PER AZIONI, 10043 Orbassano (Torino) (IT)
(72) Inventor: Carignano, M. C.R.F. Società Consortile per Azioni, 10043 Orbassano (IT); Masoero, G., C.R.F. Società Consortile per Azioni, 10043 Orbassano (IT); Storgato, A., C.R.F. Società Consortile per Azioni, 10043 Orbassano (IT)
(74) Representative: Jorio, Paolo

(56) References cited:
- WO-A-01/12458
- WO-A-99/35021
- DE-A1- 10 033 050
- DE-A1- 19 641 281
- FR-A- 2 772 682
- US-A1- 2001 033 087
- US-A1- 2004 038 640

## Description

The present invention relates to a modular dashboard for a motor vehicle.

As is known, the dashboard of a motor vehicle is set in the front part of the passenger compartment of the motor vehicle and normally extends throughout the width of the passenger compartment and is modelled to perform its aesthetic function in the passenger compartment itself. The dashboard is connected at the front to the windscreen and carries glove boxes or compartments for different purposes. Furthermore, fixed to the dashboard are a set of ventilation ducts and wiring harnesses for the instruments of the instrument panel and for control of various other devices.

In modern motor vehicles, the dashboard also has compartments required for containing the usual anti-impact safety devices known as airbags. Furthermore, in the modern technique of fabrication of motor vehicles, especially for automobiles, the increasing tendency is to produce standard models of vehicles that may be equipped in a convenient and optimized way from the standpoint of processes of assembly and integration.

There are known dashboards for motor vehicles that are made up of different components, such as the instrument panel, a support for the wiring, the containers, the safety devices, etc., which are assembled on a shell normally comprising a single piece that extends throughout the width of the passenger compartment. These known dashboards present various drawbacks. In the first place, they are complicated to produce, given that the shell made of a single piece calls for very complex moulds. Furthermore, for each model of motor vehicle it is necessary to envisage different forms of equipment, both as regards the purpose for which the motor vehicle is going to be used and as regards other options or needs. In the mass production of a model of motor vehicle and in the distribution of the corresponding spare parts, there is the drawback of having to provide enormous spaces for the stockage, selection and distribution of the various models of dashboards, which involves problems of logistics that are burdensome and very complex, so that the unit cost of production of the dashboard is relatively high.

From document FR-A-1 772 682 which discloses a modular dashboard, a motor vehicle and a method of manufacturing modular dashboards for motor vehicles according to the preamble of claims 1, 5 and 9 respectively, it is known a modular dashboard formed of a plurality of modules assembled together, wherein a first module extends throughout the entire width of the dashboard and two other modules are connected to the rear edge of the first module. The two other modules are however not adapted to be directly connected to each other.

The purpose of the invention is to provide a modular dashboard for a motor vehicle having a shell designed for diversification or personalization of the dashboard itself with a limited cost of production and management, eliminating the drawbacks of dashboards of the known art.

According to the invention, tha above purpose is achieved by a modular dashboard for motor vehicles according to claim 1, a motor vehicle according to claim 5 and a method of manufacturing modular dashboards according to claim 9, whereby the modular dashboard includes, a covering shell formed of a plurality of aesthetic and/or functional modules assembled together, said modules comprising a first module extending throughout the entire width of said dashboard and having a forward edge and a rearward edge, said modules also comprising at least two other modules designed to be located respectively on the driver side and on the passenger side of the vehicle; said at least two other modules being connected to said rearward edge; said first module having at least one opening located along said forward edge and carrying at the bottom a set of air conveying ducts communicating with said opening; characterized in that two of these at least two other modules are also connected to one another along a longitudinal edge.

For a better understanding of the invention, described herein is a preferred embodiment thereof, provided purely by way of example with the aid of the annexed drawings, in which:
Figure 1 is a plan view of a dashboard for a motor vehicle according to the invention;
Figure 2 is a perspective view of a module of the dashboard of Figure 1.

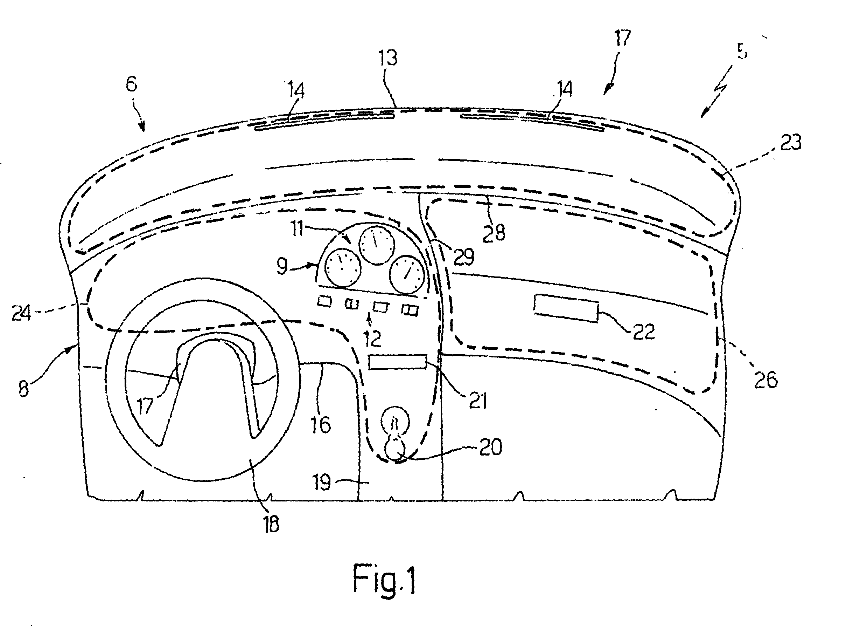

With reference to Figure 1, the reference number 5 designates as a whole a dashboard for a motor vehicle, for example an automobile with the usual driver side 6 on the left and the passenger side 7 on the right. The dashboard 5 comprises a shell 8 for covering wiring, and other parts and devices, and extends throughout the width of the passenger compartment of the automobile. The shell 8 comprises the usual instrument panel, formed by a portion 9, in which a set of instruments 11 is located, such as the speedometer, the level indicators for fuel and lubrication oil, and a set of controls 12.

The shell 8 is provided with a front edge 13, which is connected to the bottom edge of the windscreen not indicated in the figure. Along the front edge 13, the shell 8 moreover presents outlet openings 14 of ducts for ventilation of the windscreen itself. The shell 8 also has a rear edge 16 having a recess 17 for the passage of the steering column of the usual steering wheel 18. From the rear edge 16 there in general extends an appendage 19 for covering the area of control of the gear change, from which the usual gear lever 20 comes out.

Finally, the shell 8 is equipped with a compartment 21, for example for housing a car radio or for containing objects. In modern automobiles, the shell 8 comprises one or two compartments 22, each for housing an anti-impact safety device, commonly known as airbag. The shell 8 is in general modelled for performing its aesthetic function in the passenger compartment.

According to the invention, the shell 8 comprises a plurality of aesthetic and/or functional modules 23, 24 and 26 assembled together. In Figure 1, the area of the dashboard 5 corresponding to each module appears enclosed within a corresponding dashed line. At least one module 24 or 26 is chosen from among a set of different models of the module itself, for creating a corresponding model of shell 8, for the purpose of diversifying or personalizing the dashboard 5.

In particular, the shell 8 comprises a first module 23, which has an arched shape and is designed to support the windscreen. In turn the module 24 is located on the driver side 6 and comprises the instrument panel 9, the glove box 21, and the appendage 19. Finally, the module 26 is set on the passenger side 7 and comprises the compartment 22.

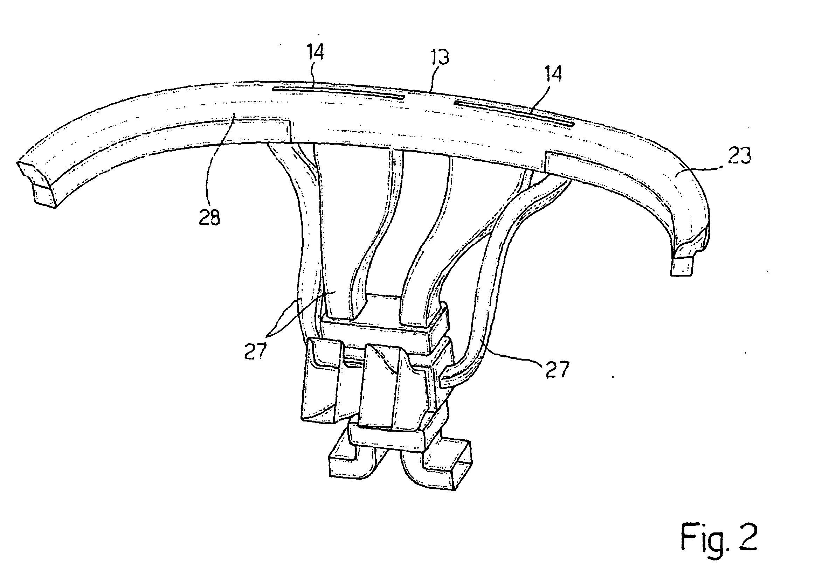

The module 23 (Figure 2) carries, at the bottom, a set of ducts 27 for conveying air, which give out into the openings 14. The module 23 has a rear edge 28 (Figure 1), which is arched and designed to mate with an analogous front edge of the two modules 24 and 26. The module 23 may be common for a set of different shells 8 and of dashboards 5, and is appropriately type approved. The two modules 24 and 26 are designed to mate along a longitudinal edge 29 and may each be chosen from among different models of the respective module 24, 26.

In particular, the module 24 set on the driver side 6 may be chosen from among a set of models of module, which have a different instrument panel 9 and designed to carry corresponding sets and/or arrangements of instruments. Likewise, the module 26 set on the passenger side 7 may be chosen from among another set of models of module having different models of glove box 22.

According to another characteristic of the dashboard 5, this is integrated with a set of wireways, arranged on the bottom side of the shell 8 and designed to house corresponding wiring for the instruments and other controls of the various devices of the automobile. In particular, each of the two modules 24 and 26 is integrated at least with a corresponding portion of wireway located on the bottom side of the module 24, 26 and not illustrated in the figure. The two portions of wireways are designed to mate along a corresponding edge of joining and/or containment of the wiring harnesses themselves.

The modules 23, 24 and 26 may be connected to one another in any known way, for example by means of electrical welding or by means of adhesive material. Subsequently, the wiring is arranged in the two portions of wireway, and the shell 8 may be mounted on the automobile.

From what has been seen above, the advantages of the dashboard according to the invention as compared to the known art are evident. In particular, by assembling different models of the modules 24 and 26 a wide range of dashboards 5 may be produced in a flexible way, so as to create personalized dashboards. Furthermore, forming individual modules 23, 24 and 26 requires equipment that is simpler than the equipment necessary for forming, in a single piece, the shell 8 for each model of dashboard 5 required. Finally, the stockage, handling, and management of the individual modules 23, 24 and 26 is less costly than that of the shells made of a single piece for the entire range of dashboards required.

It is understood that various modifications and improvements may be made to the modular dashboard described herein. For example, there may be provided a different number of modules of the shell 8. Furthermore, said modules may be assembled by means of robots and connected with means different from the ones described.

## Claims

1. A modular dashboard for a motor vehicle, including a covering shell (8) formed of a plurality of aesthetic and/or functional modules (23, 24 26) assembled together, said modules (23, 24 26) comprising a first module (23) extending throughout the entire width of said dashboard (5) and having a forward edge (13) and a rearward edge (28), said modules (23, 24, 26) also comprising at least two other modules (24, 26) designed to be located respectively on the driver side (6) and on the passenger side (7) of the vehicle; said at least two other modules (24, 26) being connected to said rearward edge (28); said first module (23) having openings (14) located along said forward edge (13) and carrying at the bottom a set of air conveying ducts (27) communicating with said openings (14); **characterized in that** two of these at least two other modules (24, 26) are also connected to one another along a longitudinal edge (29).

2. A dashboard according to Claim 1, **characterized in that** the other module (24) located on the driver side (6) carries corresponding instruments (11) and controls (12), the other module (26) located on the passenger side (7) comprising a compartment (22) designed to contain an anti-impact safety device.

3. A dashboard according to claim 2, **characterized in that** at least two of said modules (23, 24, 26) are integrated with corresponding portions of wireway designed to house wiring for said instruments (11) and controls (12), said corresponding portions of wireway being connected to one another along respective edges.

4. A dashboard according to claim 2 or 3, **characterized in that** said modules (23, 24, 26) are connected to one another along said edges (28, 29) by means of welding or adhesive.

5. A motor vehicle including a modular dashboard, wherein the vehicle includes a passenger compartment having a predetermined width, and a forward windscreen; said dashboard including a covering shell (8) formed of a plurality of aesthetic and/or functional modules (23, 24, 26) assembled together, said modules (23, 24 26) comprising a first module (23) extending throughout the entire said width and having a forward edge (13) and a rearward edge (28), said forward edge (13) being adapted to be connected to said windscreen, said modules (23, 24, 26) also comprising at least two other modules (24, 26) designed to be located respectively on the driver side (6) and on the passenger side (7); said at least two other modules (24, 26) being connected to said rearward edge (28); said first module (23) having openings (14) located along said forward edge (13) and carrying at the bottom a set of air conveying ducts (27) communicating with said openings (14); **characterized in that** two of these at least two other modules (24, 26) are also connected to one another along a longitudinal edge (29).

6. A combination according to Claim 5, **characterized in that** the other module (24) located on the drivers side (6) carries corresponding instruments (11) and controls (12), the other module (26) located on the passenger side (7) comprising a compartment (22) designed to contain an anti-impact safety device.

7. A combination according to claim 6, **characterized in that** at least two of said modules (23, 24, 26) are integrated with corresponding portions of wireway designed to house wiring for said instruments (11) and controls (12), said corresponding portions of wireway being connected to one another along respective edges.

8. A combination according to claim 6 or 7, **characterized in that** said modules (23, 24, 26) are connected to one another along said edges (28, 29) by means of welding or adhesive.

9. A method of manufacturing modular dashboards for motor vehicles, comprising the steps of:
- designing a cover shell (8) of the dashboard (5) as formed of a plurality of aesthetic and/or functional modules (23, 24, 26) including a first module (23) extending throughout the entire width of the dashboard (5) and having a forward edge (13) and a rearward edge (28), said modules (23, 24, 26) also comprising at least two other modules (24, 26) designed to be located respectively on the drive side (6) and on the passenger side (7) of the vehicle;
- providing a single model of said first module (23);
- providing a set of different models of at least one of said at least two other modules (24, 26);
- selecting the model of the at least one of said two of said other modules (24, 26) among the corresponding set of models;
- connecting said model so selected to the other of said two of said at least two modules (24, 26) along a longitudinal line (29); and
- connecting both said two modules (24, 26) to said first module (23) along said rearward edge (28).

10. A method according to claim 9, including the steps of:
- integrating at least two of said modules (23, 24, 26) with corresponding portions of wireway designed to house wiring for instruments (11) and controls (12); and
- connecting said corresponding portions of wireway to each other along respective edges.

11. A method according to claim 9 or 10, **characterized in that** said modules (23, 24, 26) are connected to one another along said edges (28, 29) by means of welding or adhesive.

## Patentansprüche

1. Modulares Armaturenbrett für ein Kraftfahrzeug, mit einer Abdeckschale (8), die aus einer Vielzahl von zusammengefügten ästhetischen und/oder funktionalen Modulen (23, 24, 26) gebildet ist, wobei die Module (23, 24, 26) ein erstes Modul (23) umfassen, das sich über die gesamte Breite des Armaturenbretts (5) erstreckt und einen vorderen Rand (13) sowie einen hinteren Rand (28) aufweist, wobei die Module (23, 24, 26) mindestens zwei weitere Module (24, 26) umfassen, die zur Anordnung auf der Fahrerseite (6) bzw. auf der Beifahrerseite (7) des Fahrzeugs bestimmt sind, wobei die mindestens zwei weiteren Module (24, 26) mit dem hinteren Rand (28) verbunden sind und wobei das erste Modul (23) entlang dem vorderen Rand (13) angeordnete Öffnungen (14) aufweist und an der Unterseite einen Satz von Lufttransportleitungen (27) trägt, die mit den Öffnungen (14) verbunden sind, **dadurch gekennzeichnet, dass** zwei dieser mindestens zwei weiteren Module (24, 26) entlang einem Längsrand (29) auch miteinander verbunden sind.

2. Armaturenbrett nach Anspruch 1, **dadurch gekennzeichnet, dass** das weitere, auf der Fahrerseite (6) angeordnete Modul (24) entsprechende Instrumente (11) und Steuereinrichtungen (12) trägt, wobei das weitere, auf der Beifahrerseite (7) angeordnete Modul (26) ein Fach (22) aufweist, das zur Aufnahme einer Sicherheitsvorrichtung für einen Aufprallschutz bestimmt ist.

3. Armaturenbrett nach Anspruch 2, **dadurch gekennzeichnet, dass** in mindestens zwei der Module (23, 24, 26) entsprechende Kabelkanalabschnitte integriert sind, die zur Aufnahme von Kabeln für die Instrumente (11) und Steuereinrichtungen (12) bestimmt sind, wobei die entsprechenden Kabelkanalabschnitte entlang jeweiliger Ränder miteinander verbunden sind.

4. Armaturenbrett nach Anspruch 2 oder 3, **dadurch gekennzeichnet, dass** die Module (23, 24, 26) durch Schweißen oder Kleben entlang den Rändern (28, 29) miteinander verbunden sind.

5. Kraftfahrzeug mit einem modularen Armaturenbrett, wobei das Fahrzeug einen Fahrgastraum mit einer vorbestimmen Breite und eine vordere Windschutzscheibe aufweist, wobei das Armaturenbrett eine Abdeckschale (8) aufweist, die aus einer Vielzahl von zusammengefügten ästhetischen und/oder funktionalen Modulen (23, 24, 26) gebildet ist, wobei die Module (23, 24, 26) ein erstes Modul (23) umfassen, das sich über die gesamte Breite erstreckt und einen vorderen Rand (13) sowie einen hinteren Rand (28) aufweist, wobei der vordere Rand (13) zur Verbindung mit der Windschutzscheibe vorgesehen ist, wobei die Module (23, 24, 26) mindestens zwei weitere Module (24, 26) umfassen, die zur Anordnung auf der Fahrerseite (6) bzw. auf der Beifahrerseite (7) bestimmt sind, wobei die mindestens zwei weiteren Module (24, 26) mit dem hinteren Rand (28) verbunden sind und wobei das erste Modul (23) entlang dem vorderen Rand (13) angeordnete Öffnungen (14) aufweist und an der Unterseite einen Satz von Lufttransportleitungen (27) trägt, die mit den Öffnungen (14) verbunden sind, **dadurch gekennzeichnet, dass** zwei dieser mindestens zwei weiteren Module (24, 26) entlang einem Längsrand (29) auch miteinander verbunden sind.

6. Kombination nach Anspruch 5, **dadurch gekennzeichnet, dass** das weitere, auf der Fahrerseite (6) angeordnete Modul (24) entsprechende Instrumente (11) und Steuereinrichtungen (12) trägt, wobei das weitere, auf der Beifahrerseite (7) angeordnete Modul (26) ein Fach (22) aufweist, das zur Aufnahme einer Sicherheitsvorrichtung für einen Aufprallschutz bestimmt ist.

7. Kombination nach Anspruch 6, **dadurch gekennzeichnet, dass** in mindestens zwei der Module (23, 24, 26) entsprechende Kabelkanalabschnitte integriert sind, die zur Aufnahme von Kabeln für die Instrumente (11) und Steuereinrichtungen (12) bestimmt sind, wobei die entsprechenden Kabelkanalabschnitte entlang jeweiliger Ränder miteinander verbunden sind.

8. Kombination nach Anspruch 6 oder 7, **dadurch gekennzeichnet, dass** die Module (23, 24, 26) durch Schweißen oder Kleben entlang den Rändern (28, 29) miteinander verbunden sind.

9. Verfahren zur Herstellung modularer Armaturenbretter für Kraftfahrzeuge, welches die folgenden Schritte umfasst:
- Entwerfen einer Abdeckschale (8) des Armaturenbretts (5), die aus einer Vielzahl von ästhetischen und/oder funktionalen Modulen (23, 24, 26) gebildet ist, die ein erstes Modul (23) umfassen, das sich über die gesamte Breite des Armaturenbretts (5) erstreckt und einen vorderen Rand (13) sowie einen hinteren Rand (28) aufweist, wobei die Module (23, 24, 26) mindestens zwei weitere Module (24, 26) umfassen, die zur Anordnung auf der Fahrerseite (6) bzw. auf der Beifahrerseite (7) des Fahrzeugs bestimmt sind;
- Bereitstellen einer einzigen Form des ersten Moduls (23);
- Bereistellen eines Satzes verschiedener Formen für mindestens eines der mindestens zwei weiteren Module (24, 26);
- Auswählen der Form des mindestens einen der zwei weiteren Module (24, 26) aus dem entsprechenden Satz von Formen;
- Verbinden der so ausgewählten Form mit dem anderen der zwei Module aus den mindestens zwei Modulen (24, 26) entlang einer Längslinie (29); und
- Verbinden beider Module (24, 26) entlang dem hinteren Rand (28) mit dem ersten Modul (23).

10. Verfahren nach Anspruch 9, bei dem:
- in mindestens zwei der Module (23, 24, 26) entsprechende Kabelkanalabschnitte integriert werden, die zur Aufnahme von Kabeln für Instrumente (11) und Steuereinrichtungen (12) bestimmt sind; und
- die entsprechenden Kabelkanalabschnitte entlang jeweiliger Ränder miteinander verbunden werden.

11. Verfahren nach Anspruch 9 oder 10, **dadurch gekennzeichnet, dass** die Module (23, 24, 26) durch Schweißen oder Kleben entlang den Rändern (28, 29) miteinander verbunden werden.

## Revendications

1. Tableau de bord modulaire pour un véhicule à moteur, comprenant une coque de recouvrement (8) constituée d'une pluralité de modules esthétiques et / ou fonctionnels (23, 24, 26) assemblés ensembles, lesdits modules (23, 24, 26) comprenant un premier module (23) s'étendant sur toute la largeur dudit tableau de bord (5) et présentant un bord avant (13) et un bord arrière (28), lesdits modules (23, 24, 26) comprenant également au moins deux autres modules (24, 26) conçus pour être situés respectivement du côté du conducteur (6) et du côté du passager (7) du véhicule ; lesdits au moins deux autres modules (24, 26) étant connectés audit bord arrière (28) ; ledit premier module (23) présentant des ouvertures (14) situées le long dudit bord avant (13) et portant au niveau de son fond un ensemble de conduits de transport de l'air (27) communiquant avec lesdites ouvertures (14) ; **caractérisé en ce que** deux de ces au moins deux autres modules (24, 26) sont également connectés l'un à l'autre le long d'un bord longitudinal (29).

2. Tableau de bord selon la revendication 1, **caractérisé en ce que** l'autre module (24) situé du côté du conducteur (6) porte des instruments (11) et des commandes (12) correspondants, l'autre module (26) situé du côté passager (7) comprenant un compartiment (22) conçu pour contenir un dispositif de sécurité antichoc.

3. Tableau de bord selon la revendication 2, **caractérisé en ce que** des parties correspondantes de chemin de câble conçues pour recevoir des câbles destinés auxdits instruments (11) et commandes (12) sont intégrées dans au moins deux desdits modules (23, 24, 26), lesdites parties correspondantes de chemin de câble étant connectées l'une à l'autre le long de bords respectifs.

4. Tableau de bord selon la revendication 2 ou 3, **caractérisé en ce que** lesdits modules (23, 24, 26) sont connectés l'un à l'autre le long desdits bords (28, 29) à l'aide d'une soudure ou d'un adhésif.

5. Véhicule à moteur comportant un tableau de bord modulaire, dans lequel le véhicule comprend un compartiment passager ayant une largeur prédéterminée et un pare-brise avant ; ledit tableau de bord comprenant une coque de recouvrement (8) constituée d'une pluralité de modules esthétiques et / ou fonctionnels (23, 24, 26) assemblés ensembles, lesdits modules (23, 24, 26) comprenant un premier module (23) s'étendant sur toute ladite largeur et présentant un bord avant (13) et un bord arrière (28), ledit bord avant (13) étant conçu pour être connecté audit pare-brise, lesdits modules (23, 24, 26) comprenant également au moins deux autres modules (24, 26) conçus pour être situés respectivement du côté du conducteur (6) et du côté du passager (7) du véhicule ; lesdits au moins deux autres modules (24, 26) étant connectés audit bord arrière (28) ; ledit premier module (23) présentant des ouvertures (14) situées le long dudit bord avant (13) et portant au niveau de son fond un ensemble de conduits de transport de l'air (27) communiquant avec lesdites ouvertures (14) ; **caractérisé en ce que** deux de ces au moins deux autres modules (24, 26) sont également connectés l'un à l'autre le long d'un bord longitudinal (29).

6. Combinaison selon la revendication 5, **caractérisée en ce que** l'autre module (24) situé du côté du conducteur (6) porte des instruments (11) et des commandes (12) correspondants, l'autre module (26) situé du côté du passager (7) comprenant un compartiment (22) conçu pour contenir un dispositif de sécurité antichoc.

7. Combinaison selon la revendication 6, **caractérisée en ce que** des parties correspondantes de chemin de câble conçues pour recevoir des câbles destinés auxdits instruments (11) et commandes (12) sont intégrées dans au moins deux desdits modules (23, 24, 26), lesdites parties correspondantes de chemin de câble étant connectées l'une à l'autre le long de bords respectifs.

8. Combinaison selon la revendication 6 ou 7, **caractérisée en ce que** lesdits modules (23, 24, 26) sont connectés l'un à l'autre le long desdits bords (28, 29) à l'aide d'une soudure ou d'un adhésif.

9. Procédé de fabrication de tableaux de bord modulaires pour véhicules à moteur, comprenant les étapes consistant à :
- concevoir une coque de recouvrement (8) du tableau de bord (5) constituée d'une pluralité de modules esthétiques et / ou fonctionnels (23, 24, 26) comprenant un premier module (23) s'étendant sur toute la largeur du tableau de bord (5) et présentant un bord avant (13) et un bord arrière (28), lesdits modules (23, 24, 26) comprenant également au moins deux autres modules (24, 26) conçus pour être situés respectivement du côté du conducteur (6) et du côté du passager (7) du véhicule ;
- fournir un modèle unique dudit premier module (23) ;
- fournir un ensemble de modèles différents d'au moins un desdits au moins deux autres modules (24, 26) ;
- sélectionner le modèle du au moins un desdits deux autres modules (24, 26) parmi l'ensemble de modèles correspondants ;
- connecter ledit modèle ainsi sélectionné à l'autre desdits deux desdits au moins deux modules (24, 26) le long d'une ligne longitudinale (29) ; et
- connecter lesdits deux modules (24, 26) audit premier module (23) le long dudit bord arrière (28).

10. Procédé selon la revendication 9, comprenant les étapes consistant à :
- intégrer des parties correspondantes de chemin de câble conçues pour recevoir des câbles destinés aux instruments (11) et aux commandes (12) dans au moins deux desdits modules (23, 24, 26) ; et
- connecter lesdites parties correspondantes de chemin de câble l'une à l'autre le long de bords respectifs.

11. Procédé selon la revendication 9 ou 10, **caractérisé en ce que** lesdits modules (23, 24, 26) sont connectés l'un à l'autre le long desdits bords (28, 29) à l'aide d'une soudure ou d'un adhésif.
